# EUROPÄISCHE PATENTSCHRIFT

(11) **EP 1 523 842 B1**
(45) Veröffentlichungstag und Bekanntmachung des Hinweises auf die Patenterteilung: **26.01.2011**
(21) Anmeldenummer: 03787687.7
(22) Anmeldetag: 18.07.2003
(51) Int. Cl.: H04M 1/02, B29C 45/16

(54) **BEHÄLTNIS, INSBESONDERE GEHÄUSE FÜR EIN TELEFONMOBILTEIL, SOWIE VERFAHREN ZUR HERSTELLUNG EINES GEHÄUSETEILS**
ENCLOSURE, PARTICULARLY A HOUSING FOR A MOBILE TELEPHONE AND METHOD FOR THE PRODUCING A HOUSING PART
CONTENANT, NOTAMMENT BOITIER DE PARTIE DE TELEPHONE MOBILE ET PROCEDE DE PRODUCTION D'UNE PARTIE DE BOITIER

(30) Priorität: 19.07.2002 DE 10232947
(43) Veröffentlichungstag der Anmeldung: 20.04.2005
(73) Patentinhaber: SIEMENS AKTIENGESELLSCHAFT, 80333 München (DE)
(72) Erfinder: SCHWORM, Ernst, 80538 München (DE)
(74) Vertreter: Fritzsche, Thomas
(86) Internationale Anmeldenummer: PCT/DE2003/002431
(87) Internationale Veröffentlichungsnummer: WO 2004/017614

(56) Entgegenhaltungen:
- EP-A- 0 180 383
- WO-A-97/08926
- US-A- 4 225 970
- US-A- 5 386 084
- US-A- 5 526 526

## Beschreibung

Die Erfindung betrifft ein Behältnis mit einem ersten Behältnisgrundkörper und einem zweiten Behältnisgrundkörper. Insbesondere betrifft die Erfindung ein Behältnis, welches ein Gehäuse für ein Telefonmobilteil darstellt. Die Erfindung betrifft weiterhin ein Verfahren zur Herstellung eines Gehäuseteils für ein Telefonmobilteil.

In der Britischen Patentanmeldung GB 2 345 818 ist ein portables Telekommunikationsbauteil, ein Mobilfunk-Handgerät beschrieben. Dieses besteht aus einer Mehrzahl von Komponenten, insbesondere einem Tastaturfeld, einem Anzeigefeld, einem oberen Gehäuse sowie einem unteren Gehäuse und einem Batterieteil. Die einzelnen Komponenten werden zusammengebaut indem das Tastaturfeld in das obere Gehäuse eingelegt, danach die die Anzeige enthaltende Komponente in das obere Gehäuse eingelegt und anschließend das untere Gehäuse mit dem oberen Gehäuse verschraubt wird. Das untere Gehäuse enthält eine Vertiefung in die der Battrerieteil eingebracht wird. Die GB 2 345 818 A gibt verschiedene Möglichkeiten der. Verschraubung oder des Ineinandersteckens des oberen und des unteren Gehäuses an.

Die internationale Patentanmeldung WO 01/083381 A1 betrifft ein Mobiltelefon mit einer Gehäuseoberschale mit integrierter Tastatur und Display. Hierzu wird in einem Spritzgußverfahren ein transparentes Kunststoffgehäuse durch Einspritzen eines Kunststoffes in eine Form erzeugt und geht mit einer Folie eine Verbindung derart ein, dass eine Gehäuseoberschale entsteht. Das Kunststoffgehäuse weist hierbei einen ersten Bereich, der als Displayfenster dient, sowie einen zweiten Bereich mit mindestens einer Aussparung mit Mitteln zum Weiterleiten eines Tastendruckes auf. Die Folie bedeckt zumindest den zweiten Bereich und realisiert oberhalb der Aussparung gelegen eine Taste, die insbesondere durch ein auf die Folie gedrucktes Zeichen gekennzeichnet ist und wobei über die Mittel ein Tastendrucks weitergeleitet wird.

Die Deutsche Patentschrift DE 196 18 453 C1 betrifft ein 2-Komponenten-Kunststoffgehäuse, insbesondere für einen Schlüssel mit Fernbedienung für ein Kraftfahrzeug. Das Gehäuse ist so hergestellt, dass in einem oberen Gehäuseteil ein elastisches Material eingespritzt wird, welches zur Halterung einer Leiterplatte dient. Das elastische Material dient weiterhin auch als eine Dichtung gegenüber einem Unterteil des Gehäuses, wobei diese Dichtung im Inneren des Unterteils liegt.

Die deutsche Offenlegungsschrift DE 196 30 966 A1 betrifft ein Verfahren zur Herstellung eines Gehäuseteils mit schirmwirkung für Funkgeräte, insbesondere ein Hand-Set eines Funkgerätes. Hierbei ist eine leitfähige Dichtung an einer Unterschale aufgebracht, welche Dichtung zur Kontaktierung einer Leiterplatte dient. Die Dichtung dichtet lediglich die Unterschale gegenüber der Leiterplatte ab.

Die deutsche Offenlegungsschrift DE 44 28 335 A1 betrifft ein Kunststoffgehäuse für ein elektrisches Modul mit einem Gehäusekörper und einer Bodenplatte. Eine Dichtung, die u.a. auch im Zweifarben-Spritzgussverfahren hergestellt sein kann, dient zur Abdichtung einer Öffnung im Gehäusekörper sowie in einer der gezeigten Ausführungsformen auch als Dichtung zwischen Gehäuseteil und Bodenplatte.

Das deutsche Gebrauchsmuster DE 298 19 434 U1 beschreibt ein Gehäuse mit einer Abschirmdichtung für eine elektromagnetisch abgeschirmte Aufnahme von elektronischen Komponenten insbesondere eines Mobiltelefongerätes. Auf ein erstes Gehäuseteil wird ein Dichtungsprofil aufgetragen, welches im Ausgangszustand pastös ist oder flüssig aufgeschäumt wird und zu einem elastisch ausgehärteten Kunststoff wird. Das ausgehärtete Dichtmaterial haftet hierbei nicht an das Oberteil an. In dem deutschen Gebrauchsmuster 93 11 554 U1 ist eine Dichtleiste für die Abdichtung eines Schlitzes eines Schiebestellers beschrieben, wobei an die Dichtleiste eine Dichtung angegossen ist. Das Material der Leiste ist härter als das Material der Dichtung, welches ein weiches, gummielastisches Material mit einer Shore-Härte von 50, sein kann.

Die internationale Anmeldung WO 00/08722 A1 betrifft ein Mobilfunktelefon mit einem feuchtigkeitsresistenten elektrischen Kontakt. Das Mobilfunktelefon weist ein Gehäuse auf, mit einer oberen Gehäuseteil und einem unteren Gehäuseteil, die zusammengefügt eine Schale ergeben, welche die darin.enthaltenen Komponenten umgibt. Der feuchtigkeitsresistente elektrische Kontakt ist außerhalb des Gehäuses angeordnet und durchdringt den unteren Gehäuseteiles, wobei er mit einem Federarm mit den elektrischen Schaltungen des Mobilfunktelefones verbunden ist. Durch das Einschmelzen des elektrischen Kontaktes in den unteren Gehäuseteile ist eine feuchtigkeitsundurchlässige Verbindung zwischen dem Material des unteren Gehäuseteils und dem elektrischen Kontakt gegeben.

Die japanische Veröffentlichung JP 6297497 beschreibt ein Herstellungsverfahren einer Dichtung die aus gummielastischem Material besteht und integral mit der Seitenwand eines Gehäuses befestigt ist. Hierbei wird um die Seitenwand ein Hohlraum gebildet, in den geschmolzenes thermoplastisches Elastomer gefüllt wird.

An Gehäuse oder Behältnisse für elektrische Geräte oder Behältnisse sowie Aufbewahrungsbehältnisse, beispielsweise zur Aufbewahrung verderblicher Lebensmittel oder witterungsempfindlicher Gegenstände, können erhöhte Anforderungen hinsichtlich der Dichtigkeit gegenüber Feuchtigkeit, Staub oder anderem gestellt sein.

Bei einem Gehäuse für ein Telefonmobilteil, beispielsweise ein schnurloses Telefon oder einem Mobilfunktelefon, kann der erste Behältnisgrundkörper eine sogenannte Oberschale und der zweite Behältnisgrundkörper eine sogenannte Unterschale oder umgekehrt sein.

Aufgabe der Erfindung ist es ein Behältnis mit zumindest zwei Behältnisgrundkörpern anzugeben, wobei zwischen den beiden Behältnisgrundkörpern eine Dichtungsfunktion gegeben ist. Diese Aufgabe wird erfindungsgemäß durch ein Behältnis gelöst, insbesondere ein Gehäuse für ein Telefonmobilteil, mit einem ersten Behältnisgrundkörper aus einem ersten Basismaterial umfassend einen ersten Rand und einem zweiten Behältnisgrundkörper aus einem zweiten Basismaterial umfassend einen zweiten Rand. Die beiden Behältnisgrundkörper stoßen entlang des ersten Randes und des zweiten Randes aneinander und weisen dort eine Dichtung aus einem Dichtungsmaterial auf, die mit dem ersten Behältnisgrundkörper fest verbunden ist, und die dichtend an dem zweiten Rand anliegt, wobei das Dichtungsmaterial aus einem elastisch deformierbaren Material besteht.

Das Behältnis kann bevorzugt ein Gehäuse für die Aufnahme elektrischer Geräte oder mechanische Bauteile, Komponenten oder Geräte sein. Insbesondere kann es sich hierbei handeln um ein Mobilfunktelefon, d.h. ein Mobilfunkendgerät, ein schnurloses Telefon auch für den Einsatz in industrieller Umgebung, wie beispielsweise Reparatur- und Produktionsstätten, Lackiererein bis hin in explosionsgefährdeter Umgebung wie beispielsweise bei der Petrochemie. Andere mögliche Behältnisse können für Taschenrechner, elektronische Terminsplaner, Sensorgehäuse, Uhren und andere vorgesehen sein. Ein entsprechendes Gehäuse kann hierbei eine Länge von einigen wenigen bis einige zehn Zentimetern, eine Breite von ebenfalls einigen wenigen Zentimetern bis einigen zehn Zentimetern aufweisen und entsprechend eine Höhe von einigen Zentimetern bis ebenfalls einigen zehn Zentimetern aufweisen. Typische Abmessung für Mobilfunkendgeräte und schnurlose Telefon liegen in Größenordnung von 5 bis 20 Zentimetern Länge, 2 bis 5 Zentimetern Breite und 1 bis 3 Zentimetern Höhe. Die Dichtung selbst kann hierbei entlang des Randes bzw. Umfanges eines entsprechenden Gehäuses verlaufen und eine Breite von kleiner einem Millimetern bis einigen Millimetern sowie eine Höhe unter einem bis zu einigen Millimetern aufweisen. Bei einem Gehäuse für ein Telefonmobilteil, beispielsweise ein schnurloses Telefon oder einem Mobilfunktelefon, kann der erste Behältnisgrundkörper eine sogenannte Oberschale und der zweite Behältnisgrundkörper ein sogenannte Unterschale oder umgekehrt sein.

Eine mit dem ersten Rand fest verbundene, insbesondere schlüssig und integral mit dem ersten Behältnisgrundkörper verbundene Dichtung bewirkt bereits eine Dichtheit hin zu dem ersten Behältnisgrundkörper. Die Dichtung ist integraler Bestandteil des ersten Randes. Eine Dichtheit zu dem zweiten Behältnisgrundkörper wird durch die elastische Deformierbarkeit des Materials der Dichtung erreicht, in dem bei einem Aneinanderstoßen des ersten Randes mit dem zweiten Rand das Dichtungsmaterial sich elastisch deformierend an dem zweiten Rand anlegt und somit weitgehend eine Dichtheit gegenüber Eindringen von Feuchtigkeit, Staub oder ähnlichem gewährleistet.

Ein solches Behältnis eignet sich mithin zur Aufnahme empfindlicher Objekte, wie elektronischer Geräte oder mechanischer Geräte sowie auch Lebensmittel, die gegen Umwelteinflüsse, wie z.B. Feuchtigkeit, Wasser, Chemikalien, Staub oder auch mechanischen Einflüssen zu schützen sind. Durch eine feste Verbindung der Dichtung mit dem ersten Behältnisgrundkörper ist die Anzahl loser bzw. gegeneinander verschiebbarer Elemente zur Herstellung einer dichtenden Verbindung zwischen dem ersten Behältnisgrundkörper und dem zweiten Behältnisgrundkörper auf diese beiden Behältnisgrundkörper reduziert. Es ist mithin nicht erforderlich, eine separate Dichtung, beispielsweise in Form eines Dichtungsringes vorzusehen und hierfür entsprechende Halterungen, Nuten oder andere arbeitsaufwendig herzustellende Halterungsvorrichtungen vorzusehen. Es reduziert sich mithin auch die Zahl der vorzuhaltenden Behältnisteile, was sowohl die Lagerung als auch die Handhabung der Behältnisteile vereinfacht. Vorzugsweise ist die Dichtung an einer Außenseite des ersten Behältnisgrundkörpers, welcher beispielsweise eine Oberschale eines Gehäuses eines Mobiltelefons sein kann, angeordnet. Hierdurch wird ein Eindringen von Staub, Feuchtigkeit, etc. bereits an der Außenseite des ersten Behältnisgrundkörpers und damit auch am Rand des zweiten Behältnisgrundkörpers weitgehend unterbunden, so dass, sich zwischen erstem Behältnisgrundkörper und zweiten Behältnisgrundkörper kein Staub, Feuchtigkeit oder Ähnliches ansammeln kann. Die Dichtung ragt vorzugsweise an der Außenseite über den ersten Behältnisgrundkörpers in Richtung des zweiten Behältnisgrundkörpers hinaus. Weiterhin kann bevorzugt aus dem ersten Behältnisgrundkörper, der Dichtung und des zweiten Behältnisgrundkörper eine Labyrinth - Dichtung gebildet sein. Dies kann auf mehrere Arten realisiert werden, wobei beispielsweise der zweite Behältnisgrundkörper in einer Art einer Stufe hinterschnitten ist und der erste Behältnisgrundkörper in diese Stufe hineinragt, so dass sich der erste Behältnisgrundkörper und der zweite Behältnisgrundkörper überschneiden. Zudem ist es möglich, dass der zweite Behältnisgrundkörper von außen nach innen gesehen hinter der Dichtung eine Erhöhung in der Richtung des ersten Behältnisgrundkörpers aufweist, wodurch ein enger Kanal zwischen erstem Behältnisgrundkörper und zweitem Behältnisgrundkörper im Inneren des Gehäuses hinter der Dichtung gebildet werden kann.

Vorzugsweise ist der zweite Rand, an dem die Dichtung anliegt aus einem härteren Material als die Dichtung selbst hergestellt. Hierbei kann bevorzugt der zweite Behältnisgrundkörper aus einem einzigen Material hergestellt sein, welches gleichzeitig auch das Material des zweiten Randes ist. Es ist ebenfalls möglich, den zweiten Rand auch aus einem anderen Material als der Rest des zweiten Behältniskörpers herzustellen. Der erste Behältniskörper kann ebenfalls vorzugsweise aus einem härteren Material als die Dichtung hergestellt sein.

Bevorzugt ist hierbei der erste Behältnisgrundkörper aus einem Hartkunststoff und die Dichtung aus einem Weichkunststoff hergestellt.

Vorzugsweise ist der erste Behältnisgrundkörper zusammen mit der Dichtung in dem sogenannten 2-Farben-Spritzgußverfahren hergestellt. Beim 2-Farben-Spritzgießen auch als 2-Komponenten-Spritzgießen bekannt, werden Kunststoffmaterialien für Einzelbauteile und Funktionselemente auch unterschiedlicher Materialien und Härte (Hart-/Weich-Verbindungen) in einem Verarbeitungszyklus hergestellt, wodurch erhebliche Montagekosten eingespart werden können. So hergestellte Bauteile oder Elemente sind je nach Wahl der Materialien resistent gegen äußere Einflüsse und zeichnen sich durch eine hohe Verbundfestigkeit aus Eine erreichte Haftkraft im Grenzflächenbereich kann dabei durch eine chemische Verbindung oder mechanische Verankerung herbeigeführt sein. Bei chemisch verträglichen Kunststoffen wird zumeist durch Anschmelzen oder Verschweißen eine feste Molekülverbindung eingegangen. Das 2-Komponenten-Spritzgußverfahren beruht auf der Kraft und/oder formschlüssigen Verbindung zweier Kunststoffkomponenten mit den allgemeinen unterschiedlichen Eigenschaften zu einem integrierten Formteil. Das 2-Komponenten-spritzgußverfahren eignet sich besonders für Bauteile, die sowohl steife als auch elastische Bereiche aufweisen sollen, wodurch unterschiedliche Funktionen gleichzeitig erfüllt werden können.

Das Material für die Dichtung ist vorzugsweise ein thermoplastischer Elastomer. Unter Elastomeren werden synthetische oder natürliche Polymere mit gummielastischem Verhalten verstanden, wie es beispielsweise in Römpps-Chemielexikon 8. Auflage, Seite 1082, Franksche Verlagshandlung Stuttgart, 1981 angegeben ist. Thermoplastische Elastomere können beispielsweise bei der Kraiburg TBE GmbH, Teplitzer Strasse 20, D-84478 Waldkraiburg bezogen werden. Bei thermoplastischen Elastomeren kann es sich um solche auf Basis von SEBS und SEPS (filtrierte Styrol-Block-Copolymere) handeln.

Für das erste Basismaterial des ersten Behältnisgrundkörpers findet vorzugsweise ein Thermoplast Anwendung. Das zweite Basismaterial des zweiten Behältnisgrundkörpers besteht vorzugsweise ebenfalls aus einem Thermoplast. Thermoplaste sind gemäß obigen Römpps-Chemielexikon bei gewöhnlicher Temperatur, insbesondere Raumtemperatur harte oder sogar spröde Kunststoffe, die bei Wärmezufuhr reversibel erweichen und mechanisch leicht verformbar werden. Weiterhin sind Thermoplaste definiert in der Deutschen Industrienorm (DIN) 7724.

Das Dichtungsmaterial der Dichtung weist vorzugsweise eine Shore-Härte zwischen 50 und 60 auf. Gemäß obigen Römpps-Chemielexikon ist nach der Deutschen Industrienorm (DIN) 53505 die Shore-Härte über den Widerstand von Elastomeren, Gummi und Kautschuk gegen das Eindringen eines Kegelstumpfes festgelegt.

Vorzugsweise weist ein Gehäuse für ein Telefonmobilteil, welches ein Handgerät eines schnurlosen Telefons oder eines Mobilfunktelefons sein kann, einen dritten Behältnisgrundkörper auf, der zur Aufnahme einer auswechselbaren elektrischen Stromquelle, insbesondere einer Batterie oder eines wiederaufladbaren Akkumulators, dient. Der dritte Behältnisgrundkörper stößt hierbei entweder an den ersten Behältnisgrundkörper oder an den zweiten Behältnisgrundkörper an und ist mit einer weiteren elastischen Dichtung gegenüber dem entsprechenden Behältnisgrundkörper abgedichtet. Die weitere Dichtung ist vorzugsweise entweder auf dem dritten Behältnisgruhdkörper selbst oder dem an diesen anstoßenden Behältnisgrundkörper, d.h. dem ersten bzw. dem zweiten Behältnisgrundkörper aufgebracht. Die Dichtung kann hierbei der gleichen Art sein, wie die Dichtung zwischen dem zweiten und ersten Behältnisgrundkörper, insbesondere kann sie in einem Zwei-Farben-Spritzgußverfahren mit dem dritten Behältnisgrundkörper oder dem diesen zugeordneten ersten bzw. zweiten Behältnisgrundkörper einen integralen Bestandteil bilden. Durch eine Aufbringung der Dichtung an einen der Behältnisgrundkörper kann wie bereits oben erläutert, eine Abdichtung der aneinandergefügten Behältnisgrundkörper, insbesondere gegen Feuchtigkeit und Staub auf einfache Art und Weise mit einer geringen Anzahl von Einzelkomponenten hergestellt werden.

Erfindungsgemäß ist die auf ein Verfahren zur Herstellung eines als Gehäuseteils, insbesondere für ein Telefonmobilteil gerichtete Aufgabe durch ein Verfahren gelöst, bei dem eine elastische Dichtung im Zwei-Farben-Spritzgussverfahren aufgebracht wird. In einem ersten Herstellungsschritt wird eine Hartkomponente auf ein festes Werkzeug gespritzt und die Hartkomponente mit einem in einer Entformungsrichtung beweglichen ersten Gegenwerkzeug geformt. In einem zweiten Herstellungsschritt wird eine die Dichtung bildende Weichkomponente auf die Hartkomponente aufgespritzt und mit einem zweiten Gegenwerkzeug, welches in dieselbe Entformungsrichtung wie das erste Gegenwerkzeug zur Entformung bewegt wird geformt wird. Mit einer Entformung sowohl der Hartkomponente also der Weichkomponente in dieselbe Richtung wird ein einfaches und schnelles sowie kostengünstiges Herstellungsverfahren für ein Gehäuseteil mit Dichtfunktion bereitgestellt, durch welches die Gefahr einer Hinterspritzung ausgeschlossen zum mindest aber erheblich reduziert wird. Sollten leichte Hinterspritzungen auftreten, so würden diese erstens an nicht sichtbaren und zweitens an nicht belasteten Stellen im Spaltrund auftreten und wären daher unproblematisch. Durch lediglich zwei Gegenwerkzeuge, auch als Pressbacken bezeichnet, ist lediglich ein geringer Aufwand mit geringen Kosten bei der Herstellung der Werkzeuge erforderlich. Gegenüber einem Herstellungsverfahren mit vier Pressbacken lässt sich das Herstellungsverfahren beschleunigen und kostengünstiger durchführen.

Vorzugsweise wird bei dem Verfahren ein Drehtellerwerkzeug verwendet, auf dem zum mindestens zwei Gehäuseteile derselben Art bearbeitet werden. Durch Drehung des Drehtellerwerkzeuges wird ein in der Bearbeitung befindliches Gehäuseteil von, einem ersten Bearbeitungsvorgang, der Aufbringung der Hartkomponente, in einem zweiten Bearbeitungsvorgang der Aufbringung der Weichkomponente überführt. Mit einem Drehtellerwerkzeug lässt sich mithin die Herstellungszeit einer Vielzahl von Gehäuseteilen der gleichen Art reduzieren. Während eines Bearbeitungszeitpunktes an einer Stelle des Drehtellerwerkzeuges die Hartkomponente des Gehäuseteils hergestellt und zeitgleich an einer anderen Stelle des Drehtellerwerkzeuges auf eine bereits hergestellte Hartkomponente des Gehäuseteils die Weichkomponente aufgebracht. Nach Drehung des Drehtellerwerkzeuges wird das Gehäuseteil mit Hartkomponente und Weichkomponente entnommen und das Gehäuseteil mit der Hartkomponente in die Position gedreht, in welche in den nächsten Bearbeitungszeitpunkt die Weichkomponente aufgebracht wird.

Bevorzugt wird die Weichkomponente auf die Hartkomponente aufgebracht, wenn die Hartkomponente noch warm ist. Warm bedeutet in diesem Zusammenhang, dass die Hartkomponente noch eine Temperatur aufweist bei der eine Anbindung der Weichkomponente und an die Hartkomponente erfolgt, insbesondere eine chemische Molekülbindung entsteht, die stärker ist als bei normaler Raumtemperatur wäre.

Anhand der Zeichnung werden das Behältnis, insbesondere ein Gehäuse für ein Telefonmobilteil, sowie das Verfahren zur Herstellung eines Gehäuseteils beispielhaft näher erläutert.

Es versteht sich, dass andere Ausführungen möglich sind, die von der Erfindung miterfasst sind. Die Figuren zeigen hierbei eine nicht unbedingt maßstäbliche und teilweise schematisierte Darstellung eines Telefonmobilteils. Es zeigen:
- Figur 1: eine perspektivische Darstellung eines Gehäuses ei- nes Telefonmobilteils,
- Figur 2: einen Behältnisgrundkörper, eine Oberschale, eines Telefonmobilteils,
- Figur 3: eine Draufsicht auf einen unteren Behältnisgrund- körper, eine Unterschale,
- Figur 4: eine Draufsicht auf die Innenseite einer Oberschale gemäß Figur 2,
- Figur 5: ein Drehtellerwerkzeug mit zwei Aufnahmepositionen für ein Gehäuseteil in einer schematischen Drauf- sicht,
- Figur 6: einen Ausschnitt eines Längsschnittes durch das Drehtellerwerkzeug mit einer Hartkomponente eines Gehäuseteils und einem Pressbacken.
- Figur: 7 einen Ausschnitt analog zu Figur 6 mit einer auf die Hartkomponente aufgebrachten Weichkomponente und einen hierzu entsprechenden Pressbacken.
- Figur 8: einen Ausschnitt durch einen Längsschnitt eines Be- hältnisses mit einem ersten Behältnisgrundkörper, eine Dichtung aufweisend und einem zweiten Behält- nisgrundkörper und
- Figur 9: einen Ausschnitt durch ein weiteres Behältnis mit einem ersten Behältnisgrundkörper und Dichtung so- wie einem zweiten Behältnisgründkörper.

Die Bezugszeichen haben in sämtlichen Figuren die selbe Bedeutung.

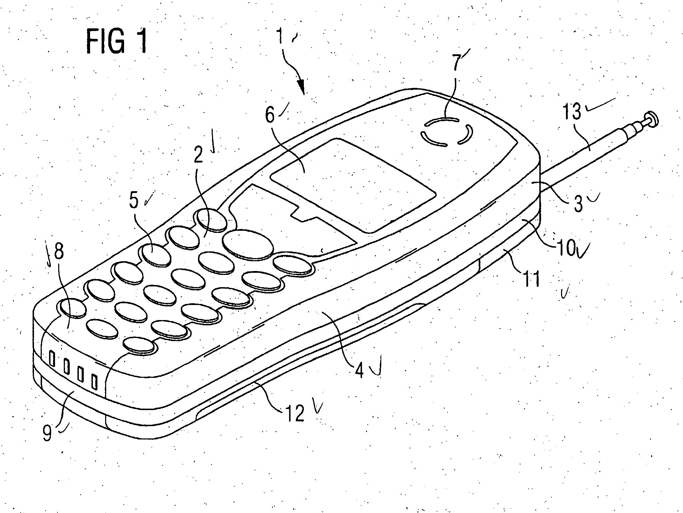

In Figur 1 ist in einer perspektivischen Darstellung ein Behältnis 1, hier ein Gehäuse 1 eines Telefonmobilteils, dargestellt. Das Gehäuse 1 weist einen ersten Behältnisgrundkörper 2 auf, der aus einer Hartkomponenten 8 hergestellt ist, auf die an einem ersten Rand 3, entsprechend im wesentlichen dem äußeren Umfang des ersten Behältnisgrundkörpers 2, eine elastisch deformierbare Weichkomponente 4 aufgebracht ist. In dem ersten Behältnisgrundkörper 2, der eine Oberschale 2 darstellt, sind Öffnungen für Tasten 5, ein Display 6 und einen Lautsprecher 7 vorgesehen. Die Hartkomponente 8 ist aus einem ersten Basismaterial, insbesondere einem Thermoplasten hergestellt. Das Gehäuse 1 weist einen zweiten Behältnisgrundkörper 9, eine Unterschale, auf. Diese Unterschale 9 hat einen zweiten Rand 10, der mit dem ersten Rand 3 der Oberschale 2 aneinander stößt. Der zweite Rand 10 tritt dabei in unmittelbaren Kontakt mit der Weichkomponente 4, der Dichtung 4, so dass das Gehäuse 1 gegenüber dem Eindringen von Staub und Feuchtigkeit abgedichtet ist. An der der Oberschale 2 abgewahdten. Seite ist auf die Unterschale 9 eine weitere Weichkomponente 11 zumindest in einem Bereich zur Aufnahme eines dritten Behältnisgrundkörpers 12, eines Batterie- oder Akkumulatorteils, aufgebracht. Aus dem Gehäuse 1 ragt zudem eine Sende- und Empfangsantenne 13 heraus.

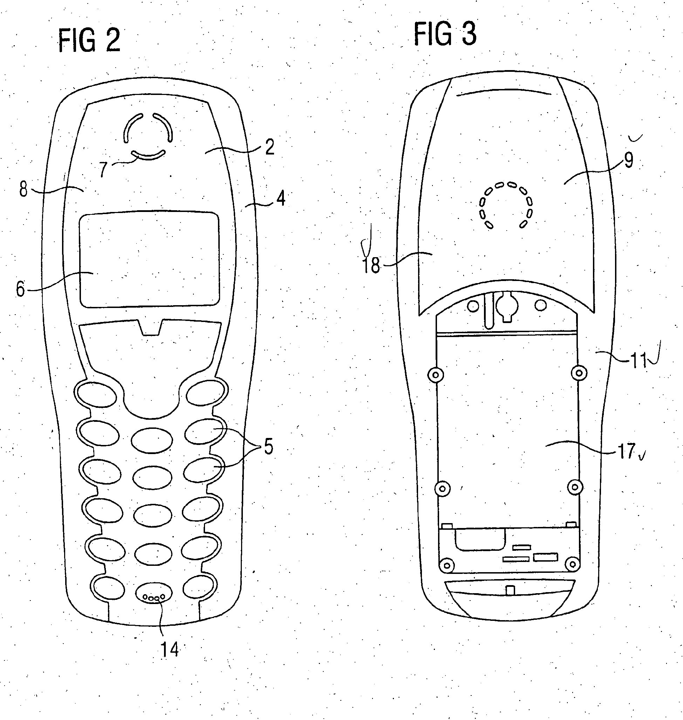

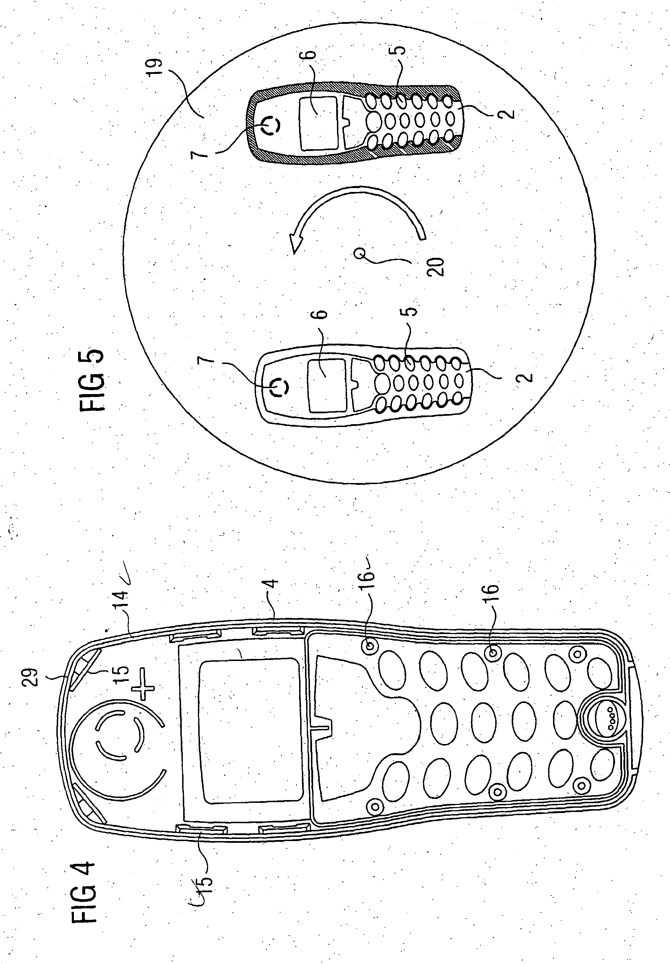

In Figur 2 ist eine alternative Ausführungsform eines ersten Behältnisgrundkörpers 2, einer Oberschale eines schnurlosen Teleforimobilteils in einer Draufsicht auf die Außenseite, dargestellt. Die Oberschale 2 weist ebenfalls Öffnungen für Tasten 5, ein Display 6, einen Lautsprecher 7 sowie ein Mikrofon 14 auf. Am äußeren Umfang, einem ersten Rand 3 des ersten Behältnisgrundkörpers 2 ist an der Außenseite ein Weichmaterial aufgebracht, welches, wie in Figur 4 schematisch dargestellt ist, in Form eines Steges über das eine Hartkomponente 8 bildende erste Basismaterial'von der Außenseite weg, hin zu einem zweiten Behältnisgrundkörper 9 (siehe Figur 3) gerichtet ist. Die Weichkomponente 4 ist auch auf die Außenseite der Oberschale 2 in Form eines breiten Bandes aufgebracht, wo sie keine Dichtfunktion hat. Sie kann hierbei als zusätzliches optisches Element dienen.

Figur 4 zeigt eine Oberschale 2, gemäß Figur 2 in einer Draufsicht auf die Innenseite. Auf der Innenseite der Oberschale 2 weist die Hartkomponente 8 am äußeren Umfang einen umlaufenden, nach innen gerichteten äußeren Steg 14 auf. Noch weiter außen läuft um diesen äußeren Steg 14 herum die Weichkomponente 4, dabei einen Dichtsteg 27 bildend. Der äußere Steg 14 sowie die nach Innen hineinragende Dichtung 4 sind voneinander beabstandet, beispielsweise um weniger als 1 mm oder bis zu einigen mm. Durch die Hartkomponentenvertiefung 24 und die Weichkomponentenvertiefung 25 werden der Dichtsteg 27 und der äußere Steg 14 gebildet, die durch eine entsprechende Vertiefung von einander beabstandet sind. Es ist hierbei sowohl möglich, dass der Dichtsteg 27 über den äußeren Steg 14 hinausragt oder umgekehrt oder beide auf gleicher Höhe abschließen. Innerhalb des von dem äußeren Steg 14 umschlossenen Bereiches der Hartkomponente 8 weist diese Arretierungsstege 15 sowie Führungszylinder 16 auf. Diese dienen zum Eingriff in entsprechende an der Unterschale 9 angebrachten Gegenstege und Zylinder zur Fixierung und zum Zusammenhalten der Oberschale 2 mit der Unterschale 9 zur Bildung eines Gehäuses 1.

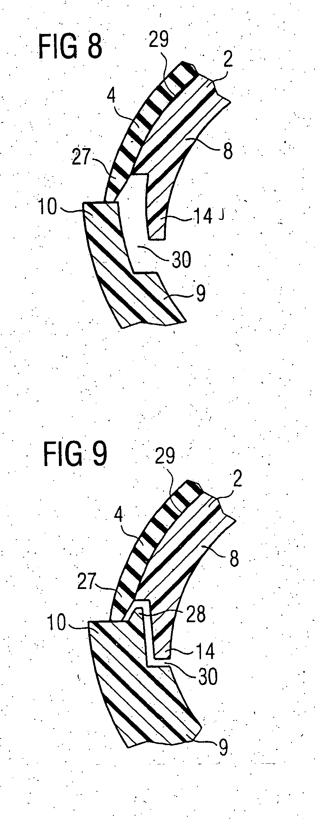

Durch den Dichtsteg 27 und den äußeren Steg 14, welcher sich bevorzugt in die Unterschale 9 hineinerstreckt wird zwischen dem Dichtsteg 14 und dem zweiten Rand 10 ein Kanal einer Labyrinth - Dichtung 30 gebildet (siehe Fig. 8). In der Ausführungsform nach Fig. 9 mit dem Zusatzdichtsteg 28, der sich in die Vertiefung zwischen den Dichtsteg 27 und den äußeren Steg 14 hineinerstreckt wird ein noch engerer Kanal zwischen Oberschale 2 und Unterschale 9 einer Labyrinth - Dichtung 30 gebildet.

In Figur 3 ist eine Unterschale 9, passend zur Oberschale 2, gemäß Figur 2 in einer Draufsicht auf die Außenseite dargestellt. Die Unterschale 9 weist einen Aufnahmebereich 17 für ein nicht dargestelltes Akkumulatorteil dar. Der Aufnahmebereich 17 ist von einer weiteren Weichkomponente 11 umrandet, welche auf die Hartkomponente 18 (zweites Basismaterial) der Unterschale 9 aufgebracht ist. Die weitere Weichkomponente 11 bildet hierbei eine Dichtung zwischen der Unterschale 9 und dem nicht dargestellten Akkumulatorteil. Die Hartkomponente 8 und 18 sind vorzugsweise aus dem gleichen Basismaterial, insbesondere einem Thermoplasten hergestellt. Weichkomponente 4, 11 sind ebenfalls vorzugsweise aus einem gleichen Dichtungsmaterial, insbesondere einem thermoplastischen Elastomer hergestellt.

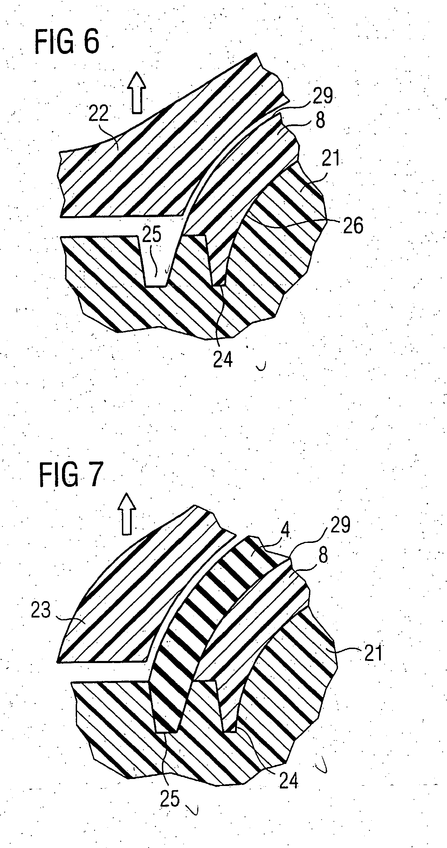

In Figur 5 ist schematisch in einer Draufsicht ein Drehtellerwerkzeug 19 dargestellt, welches um eine Drehachse 20 drehbar ist. Das Drehtellerwerkzeug 19 weist zwei gleichartige Werkzeugstrukturen zur Herstellung identischer Gehäuseteile auf (siehe Figur 6, Figur 7). Das in Figur 5 schematisch dargestellte Drehtellerwerkzeug 19 dient der Herstellung eines ersten Behältnisgrundkörpers 2, einer Oberschale eines Gehäuses eines Telefonmobilteils. Ein solcher erster Behältnisgrundkörper 2 weist analog zu den in Figur 1 und 2 dargestellte Oberschale 2 Öffnungen für Tasten 5, Display 6, Lautsprecher 7 auf. Dem Drehtellerwerkzeug 19 ist zur Herstellung der Oberschale 2 ein nicht dargestelltes bewegliches Gegenwerkzeug, welches in Richtung der Drehachse 20 verschieblich ist und nicht dargestellt ist, zugeordnet. Das Drehtellerwerkzeug 19 stellt die feste Werkzeughälfte dar, das nicht dargestellte Gegenwerkzeug die bewegliche Werkzeughälfte. Die Herstellung der Oberschale 2 erfolgt in zwei Schritten, wobei in einem ersten Verfahrensschritt nach Zusammenführen des Drehtellerwerkzeuges 19 und des beweglichen Gegenwerkzeuges 22 (Siehe Figur 6) mittels des Spritzgußverfahrens eine Hartkomponente zwischen das Drehtellerwerkzeug 19 und das erste bewegliches Gegenwerkzeug 22 eingespritzt wird. Die Werkzeugstruktur 21 des Drehtellerwerkzeuges 19 weist eine Hartkomponentenvertiefung 24 sowie die sich daran anschließende Gehäusekonturstruktur 26 auf. Die in den zwischen dem Drehtellerwerkzeug 19 und dem ersten beweglichen Gegenwerkzeug 22 eingespritzte Hartkomponente 8 nimmt gemäß der Gehäusekonturstruktur 26 die Form der Oberschale 2 an, wobei die in die Hartkomponentenvertiefung 24 eingedrungene Hartkomponente 8 einen entsprechenden Steg, beispielsweise einen äußeren Steg 14 analog zu Figur 4 bildet. Nach Einspritzen der Hartkomponente 8 wird das erste bewegliche Gegenwerkzeug 22 in Richtung der Drehachse 20 hochgefahren wo durch eine Entformung der Hartkomponente 8 in vertikaler Richtung erfolgt. Nach diesem ersten Herstellungsschritt wird das Drehtellerwerkzeug 19 um 180° gedreht, so dass die Hartkomponente 8 nunmehr von einem zweiten beweglichen Gegenwerkzeug 23 umgeben werden kann (siehe Figur 7). Der sich zwischen der Hartkomponente 8 und dem zweiten beweglichen Werkzeug 23 ergebende Hohlraum wird mit einer Weichkomponente 4 ausgespritzt. Diese Weichkomponente 4 fließt bis in eine Weichkomponentenvertiefung 25 des Drehtellerwerkzeuges 19 hinein und erhält seine Kontur durch die Hartkomponente 8. Die Weichkomponente wird hierbei auf eine Außenseite 29 der Hartkomponente aufgespritzt. Vorzugsweise wird die Weichkomponente 4, welche ein thermoplastischer Elastomer sein kann, auf die Hartkomponente 8, welche ein Thermoplast sein kann, bereits dann aufgespritzt, wenn die Hartkomponente 8 noch eine so erhöhte Temperatur aufweist, dass eine gute chemische Bindung zwischen der Hartkomponente 8 und der Weichkomponente 4 erfolgt. Das zweite bewegliche Gegenwerkzeug 23 wird ebenfalls in Richtung der Drehachse 20 abgehoben, so dass ebenfalls eine Entformung der Weichkomponente 4 in vertikaler Richtung erfolgt (siehe Figur 7). Durch die Weichkomponentenvertiefung 25 bildet die Weichkomponente 4 ebenfalls eine Art Steg aus, welcher durch die elastische Deformierbarkeit der Weichkomponente 4 sich als Dichtung gegenüber einer Unterschale des Gehäuses für ein Telefonmobilteil eignet. (Dichtsteg 27 analog zu Figur 8 und 9).

Durch die Hartkomponentenvertiefung 24 und die Weichkomponentenvertiefung 25 werden der Dichtsteg 27 und der äußere Steg 14 gebildet, die durch eine entsprechende Vertiefung voneinander beabstandet sind. Es ist hierbei sowohl möglich, dass der Dichtsteg 27 über den äußeren Steg 14 hinausragt oder umgekehrt oder beide auf gleicher Höhe abschließen.

In den Figuren 8 und 9 sind zwei unterschiedliche Ausführungsformen von einem ersten Behältnisgrundkörper 2 und einem daran anliegenden zweiten Behältnisgrundkörper 9 in einem Ausschnitt eines Längsschnittes dargestellt. Der erste Behältnisgrundkörper 2 weist jeweils eine Hartkomponente 8 mit einem äußeren Steg 14 auf. Außen an den ersten Behältnisgrundkörper 2 ist jeweils eine als Dichtung dienende Weichkomponente 4 aufgebracht, die einen Dichtsteg 27 bildet, der dem äußeren Steg 14 benachbart ist und aufgrund der Materialeigenschaft der Weichkomponente 4 elastisch deformierbar ist. Die Weichkomponente 4 liegt mit dem Dichtsteg 27 dichtend an dem Rand 10 des zweiten Behältnisgrundkörpers 9 an. In Figur 9 weist der zweite Behältnisgrundkörper 9 einen Zusatzdichtsteg 28 auf, der in den Raum zwischen den Dichtsteg 27 und dem äußeren Steg 14 hineinragt. Durch den Dichtsteg 27 und den äußeren Steg 14, welcher sich bevorzugt in die Unterschale 9 hineinerstreckt wird zwischen dem Dichtsteg 14 und dem zweiten Rand 10 ein Kanal einer Labyrinthdichtung 30 gebildet (Siehe Figur 8). In der Ausführungsform nach Figur 9 mit dem Zusatzdichtsteg 28, der sich in die Vertiefung zwischen den Dichtsteg 27 und den äußeren Steg 14 hineinerstreckt, wird ein noch engerer Kanal zwischen Oberschale 2 und Unterschale 9 einer Labyrinthdichtung 30 gebildet. Hierdurch wird die Dichtfunktion des aus ersten Behältnisgrundkörper 2 und zweiten Behältnisgrundkörper 9 gebildeten Gehäuses 1 gegenüber Staub und Feuchtigkeit weiter verbessert. Durch Verwendung des Zwei-Farben-Spritzgußverfahrens, wie oben erläutert, lassen sich unterschiedliche Ausgestaltungen zwischen Dichtsteg 27 der Weichkomponente 4 und' der Hartkomponente 8 insbesondere dem äußeren Steg 14 in ihrer gegenseitigen Lage, Länge usw. realisieren.

## Patentansprüche

1. Behältnis (1), insbesondere Gehäuse für ein Telefonmobilteil, mit einem ersten Behältnisgrundkörper(2) aus einem ersten Basismaterial (8) umfassend einen ersten Rand (3) und einem zweiten Behältnisgrundkörper (9) aus einem zweiten Basismaterial (18) umfassend einen zweiten Rand (10), die entlang des ersten Randes (3) und des zweiten Randes (10) aneinander stoßen, und mit einer Dichtung (4) aus einem Dichtungsmaterial,
die mit dem ersten Behältnisgrundkörper (2) fest
verbunden ist,
- deren Dichtungsmaterial aus einem elastisch deformierbaren Material besteht, **dadurch gekennzeichnet daß**, die Dichtung
- an einer Außenseite (29) des ersten Behältnisgrundkörper (2) angeordnet ist,
- und die dichtend an dem zweiten Rand (10) an liegt.

2. Behältnis (1) nach Anspruch 1,
wobei die Dichtung (4) an der Außenseite (29) über den ersten Behältnisgrundkörper (2) in Richtung des zweiten Behältniskörpers (9) hinausragt.

3. Behältnis (1) nach einem der vorhergehenden Ansprüche, wobei eine Labyrinth-Dichtung (30) aus erstem Behältnisgrundkörper (2), Dichtung (4) und zweitem Behältnisgrundkörper (9) gebildet ist.

4. Behältnis (1) nach einem der vorhergehenden Ansprüche, wobei der zweite Rand (10) an dem die Dichtung (4) an liegt aus einem härteren Material als die Dichtung (4) besteht.

5. Behältnis (1) nach einem der vorhergehenden Ansprüche,wobei der erste Behältnisgrundkörper (2) aus einem Hartkunststoff und die Dichtung (4) aus einem weicheren Kunststoff hergestellt ist.

6. Behältnis (1) nach Anspruch 5, wobei der erste Behältnisgrundkörper (2) mit der Dichtung (4) im Zwei-Farben-Spritzgußverfahren hergestellt ist.

7. Behältnis (1) nach einem der vorhergehenden Ansprüche, wobei die Dichtung (4) aus einem thermoplastischen Elastomer besteht.

8. Behältnis (1) nach einem der vorhergehenden Ansprüche, wobei das erste Basismaterial (8) des ersten Behältnisgrundkörpers (2) aus einem Thermoplast besteht.

9. Behältnis (1) nach einem der vorhergehenden Ansprüche, wobei das Dichtungsmaterial eine Shore-Härte zwischen 50 - 60 aufweist.

10. Behältnis (1) nach einem der vorherigen Ansprüche, zur Aufnahme elektrischer, elektronischer oder mechanischer Komponenten oder Lebensmittel.

11. Behältnis (1) nach einem der vorhergehenden Ansprüche, welches ein Gehäuse für ein Telefonmobilteil ist und einen dritten Behältnisgrundkörper (12) aufweist, der zur Aufnahme eines auswechselbaren elektrischen Stromquelle dient, wobei der dritte Behältnisgrundkörper (12) entweder an den ersten Behältnisgrundkörper (2) oder den zweiten Behältnisgrundkörper (9) anstößt und mit einer weiteren elastischen Dichtung (11) gegenüber diesem abgedichtet wird, wobei die weitere Dichtung (11) auf dem dritten Behältnisgrundkörper (12) oder dem zweiten (9) bzw. dem ersten (2) Behältnisgrundkörper aufgebracht ist.

12. Verfahren zur Herstellung eines Gehäuseteils (2,9) für ein Telefonmobilteil, mit einer elastischen Dichtung (4) im Zwei-Farben-Spritzgußverfahren, wobei in einem ersten Herstellungsschritt eine Hartkomponente auf ein festes Werkzeug gespritzt wird, die Hartkomponente (8) mit einem in eine Entformungsrichtung beweglichen ersten Gegenwerkzeug (22) geformt wird und **dadurch gekennzeichnet, daß** in einem zweiten Herstellungsschritt eine die Dichtung (4) bildende Weichkomponente auf die Außenseite (29) der Hartkomponente (8) aufgespritzt wird und mit einem zweiten Gegenwerkzeug (23), welches in die selbe Entformungsrichtung wie das erste Gegenwerkzeug (22) zur Entformung bewegt wird, geformt wird.

13. Verfahren nach Anspruch 12, wobei ein Drehtellerwerkzeug (19) verwendet wird, auf dem durch Drehung zwei Gehäuseteile in Bearbeitung sind, eines zur Aufbringung der Hartkomponente (8) und eines zur Aufbringung der Weichkomponente (4).

14. Verfahren nach einem der Ansprüche 12 und 13, wobei die Weichkomponente (4) auf die Hartkomponente (8) aufgebracht wird, wenn letztere noch warm ist.

## Claims

1. Enclosure (1), in particular a housing for a mobile telephone part, said enclosure having a first enclosure base body (2) produced from a first base material (8) including a first edge (3) and a second enclosure base body (9) produced from a second base material (18) including a second edge (10), said first enclosure base body and said second enclosure base body adjoining each other along the first edge (3) and the second edge (10), and having a seal (4) produced from a sealing material,
- said seal being fixedly connected to the first enclosure base body (2),
- the sealing material of said seal being produced from an elastically deformable material, **characterized in that** the seal
- is arranged on an outside (29) of the first enclosure base body (2),
- and abuts in a sealing manner against the second edge (10).

2. Enclosure (1) according to Claim 1, wherein the seal (4) projects on the outside (29) beyond the first enclosure base body (2) in the direction of the second enclosure body (9).

3. Enclosure (1) according to one of the preceding claims, wherein a labyrinth seal (30) is formed by the first enclosure base body (2), the seal (4) and the second enclosure base body (9).

4. Enclosure (1) according to one of the preceding claims, wherein the second edge (10) against which the seal (4) abuts, is produced from a harder material than the seal (4).

5. Enclosure (1) according to one of the preceding claims, wherein the first enclosure base body (2) is produced from a hard plastics material and the seal (4) is produced from a softer plastics material.

6. Enclosure (1) according to Claim 5, wherein the first enclosure base body (2) with the seal (4) is produced using the two-colour injection moulding method.

7. Enclosure (1) according to one of the preceding claims, wherein the seal (4) is produced from a thermoplastic elastomer.

8. Enclosure (1) according to one of the preceding claims, wherein the first base material (8) of the first enclosure base body (2) is produced from a thermoplast.

9. Enclosure (1) according to one of the preceding claims, wherein the Shore hardness of the sealing material is between 50 and 60.

10. Enclosure (1) according to one of the preceding claims, for accommodating electric, electronic or mechanical components or foodstuffs.

11. Enclosure (1) according to one of the preceding claims, said enclosure being a housing for a mobile telephone part and having a third enclosure base body (12), which is for accommodating an exchangeable electrical power source, wherein the third enclosure base body (12) adjoins either the first enclosure base body (2) or the second enclosure base body (9) and is sealed relative to said enclosure base body by way of an additional elastic seal (11), wherein the additional seal (11) is applied on the third enclosure base body (12) or the second (9) or the first (2) enclosure base body.

12. Method for producing a housing part (2, 9) for a mobile telephone part, said method having an elastic seal (4) produced using the two-colour injection moulding method, wherein in a first production step a hard component is injected onto a fixed tool, the hard component (8) is moulded by way of a first counter-tool (22) that is moveable in a mould removal direction, **characterized in that** in a second production step a soft component forming the seal (4) is injected onto the outside (29) of the hard component (8) and is moulded by way of a second counter-tool (23), which is moved for removal from the mould in the same mould removal direction as the first counter-tool (22).

13. Method according to Claim 12, wherein a turntable tool (19) is used, on which two housing parts are processed by means of rotation, one for the application of the hard component (8) and one for the application of the soft component (4).

14. Method according to one of Claims 12 and 13, wherein the soft component (4) is applied onto the hard component when the latter is still hot.

## Revendications

1. Contenant (1), en particulier boîtier pour une partie de téléphone mobile, avec un premier corps de base de contenant (2) en une première matière de base (8) comprenant un premier bord (3) et avec un deuxième corps de base de contenant (9) en une deuxième matière de base (18) comprenant un deuxième bord (10), lesquels butent l'un contre l'autre le long du premier bord (3) et du deuxième bord (10), et avec une garniture d'étanchéité (4) en une matière d'étanchéité,
laquelle est reliée de manière fixe au premier corps de base de contenant (2), et dont la matière d'étanchéité se compose d'une matière élastiquement déformable, **caractérisé en ce que** la garniture d'étanchéité est disposée sur un côté extérieur (29) du premier corps de base de contenant (2), et **en ce qu'**elle repose de manière étanche contre le deuxième bord (10).

2. Contenant (1) selon la revendication 1,
la garniture d'étanchéité (4) sur le premier côté extérieur (29) dépassant vers l'extérieur du premier corps de base de contenant (2) en direction du deuxième corps de base de contenant (9).

3. Contenant (1) selon l'une quelconque des revendications précédentes, une garniture en labyrinthe (30) étant formée à partir du premier corps de base de contenant (2), de la garniture d'étanchéité (4) et du deuxième corps de base de contenant (9).

4. Contenant (1) selon l'une quelconque des revendications précédentes, le deuxième bord (10) contre lequel repose la garniture d'étanchéité (4) se composant d'une matière plus dure que celle de la garniture d'étanchéité (4).

5. Contenant (1) selon l'une quelconque des revendications précédentes, le premier corps de base d'étanchéité (2) étant fabriqué à partir d'une matière synthétique dure et la garniture d'étanchéité (4) étant fabriquée à partir d'une matière synthétique plus tendre.

6. Contenant (1) selon la revendication 5, le premier corps de base de contenant (2) étant fabriqué avec la garniture d'étanchéité (4) selon un procédé de moulage par injection avec deux couleurs.

7. Contenant (1) selon l'une quelconque des revendications précédentes, la garniture d'étanchéité (4) se composant d'un élastomère thermoplastique.

8. Contenant (1) selon l'une quelconque des revendications précédentes, la première matière de base (8) du premier corps de base de contenant (2) se composant d'une matière thermoplastique.

9. Contenant (1) selon l'une quelconque des revendications précédentes, la matière d'étanchéité présentant une dureté Shore comprise entre 50-60.

10. Contenant (1) selon l'une quelconque des revendications précédentes, pour l'hébergement de composants électriques, électroniques ou mécaniques ou d'aliments.

11. Contenant (1) selon l'une quelconque des revendications précédentes, lequel est un boîtier pour une partie de téléphone mobile et présente un troisième corps de base de contenant (12) servant à héberger une source de courant électrique interchangeable, le troisième corps de base de contenant (12) butant contre le premier corps de base de contenant (2) ou le deuxième corps de base de contenant (9) et étant colmaté par rapport à celui-ci à l'aide d'une autre garniture d'étanchéité élastique (11), moyennant quoi l'autre garniture d'étanchéité (11) est appliquée sur le troisième corps de base de contenant (12) ou sur le deuxième corps de base de contenant (9) et/ou sur le premier corps de base de contenant (2).

12. Procédé de fabrication d'un élément de boîtier (2, 9) pour une partie de téléphone mobile, avec une garniture d'étanchéité élastique (4) selon un procédé de moulage par injection avec deux couleurs, moyennant quoi lors d'une première étape de fabrication, un composant dur est moulé par injection sur un outil fixe, moyennant quoi le composant dur (8) est formé avec un premier outil opposé (22) mobile dans une direction de déformation, **caractérisé en ce qu'**au cours d'une deuxième étape de fabrication, un composant tendre formant la garniture d'étanchéité (4) est moulé par injection sur le côté extérieur (29) du composant dur (8) et est formé avec une deuxième outil opposé (23) que l'on fait bouger dans la même direction de déformation que le premier outil opposé (22).

13. Procédé selon la revendication 12, un plateau tournant (19) étant utilisé, sur lequel deux éléments de boîtier sont usinés grâce à la rotation, l'un pour l'application du composant dur (8) et l'autre pour l'application du composant tendre (4).

14. Procédé selon l'une quelconque des revendications 12 et 13, le composant tendre (4) étant appliqué sur le composant dur (8), lorsque ce dernier est encore chaud.
